# EUROPEAN PATENT SPECIFICATION

(11) **EP 4 297 597 B1**
(45) Date of publication and mention of the grant of the patent: **02.04.2025**
(21) Application number: 22707743.5
(22) Date of filing: 24.02.2022
(51) Int. Cl.: A24F 40/46, A24F 40/70, H05B 3/04, H05B 3/26, H05B 3/42, A24F 40/20, B22F 10/10, B33Y 80/00

(54) **HEATER ELEMENT AND METHOD OF MANUFACTURING A HEATER ELEMENT**
HEIZELEMENT UND VERFAHREN ZUR HERSTELLUNG EINES HEIZELEMENTS
ÉLÉMENT CHAUFFANT ET PROCÉDÉ DE FABRICATION D'UN ÉLÉMENT CHAUFFANT

(30) Priority: 26.02.2021 EP 21159769
(43) Date of publication of application: 03.01.2024
(73) Proprietor: Philip Morris Products S.A., 2000 Neuchâtel (CH)
(72) Inventor: CAPO, Silvia, 2000 Neuchâtel (CH); DOTTOR, Marco, 20121 Milano (IT); THIELEN, Moritz, 9642 Ebnat-Kappel (CH); SCHLÄPFER, Pascal, 9642 Ebnat-Kappel (CH); WOLF, Stefan, 9642 Ebnat-Kappel (CH)
(74) Representative: Reddie & Grose LLP
(86) International application number: PCT/EP2022/054701
(87) International publication number: WO 2022/180177

(56) References cited:
- WO-A1-2020/142004
- CN-U- 203 523 811
- US-A- 5 878 752

## Description

The present disclosure relates to a heater element suitable for use with an aerosol-generating device. The present disclosure also relates to a method of manufacturing such a heater element.

Heater elements for use as part of an aerosol-generating device are known in the art. More particularly, electrically-powered heater elements are known which generate heat by resistive heating under the action of an electric current. Such electrically-powered resistive heater elements may take the form of a ceramic substrate on which is arranged a metallic resistive heating track. In use, electricity fed to the resistive heating track would induce heating of the track. An aerosol-generating device incorporating such a known resistive heater element may be used with a known aerosol-generating article containing a plug of aerosol-forming substrate. In use, the resistive heater element is inserted within the aerosol-generating article so that the heater element directly contacts the aerosol-forming substrate. The heat imparted to the aerosol-forming substrate from the resistive heater element vaporises constituent elements of the aerosol-forming substrate. On passage through the aerosol-generating article, the vapours evolved from the substrate cool and condense to form an aerosol for inhalation by a user. However, repeated use of the aerosol-generating device with different aerosol-generating articles can result in a gradual build-up of residue on the heater element. This residue can hinder the ability of the heater element to convey heat to the aerosol-forming substrate, and can also impart undesired flavours to vapours evolved from the aerosol-forming substrate. Therefore, the presence of such residue on the heater element can be detrimental to the user experience for the aerosol-generating device. Cleaning may be performed to remove this residue from the surface of the heater element. However, cleaning can result in the application of one or a combination of tensile, compressive and twisting forces being applied to the heater element. As ceramic substrates are inherently brittle, the forces applied to such known ceramic-based heater elements during cleaning can result in the heater element fracturing.

Replacement of the ceramic substrate with a substrate formed of metallic material can help to reduce the likelihood of the heater element fracturing, with metallic materials generally having greater ductility than ceramic materials. However, metallic materials generally possess greater thermal conductivity compared to ceramic materials. When using a metallic material for the substrate of the heater element in place of a ceramic material, the relatively higher thermal conductivity of the metallic substrate can lead to heat conducted into the substrate from the resistive heating track being rapidly conveyed throughout the metallic substrate. The rapid passage of heat throughout the metallic substrate can result in corresponding rapid increases in temperature of the substrate. This increase in substrate temperature can thereby result in overheating of sensitive electronic components of the aerosol-generating device associated with control and operation of the heater element. For example, control circuitry used to control the supply of electrical power to the heater element is often located in close proximity to where the heater element is positioned within the aerosol-generating device. Excessive temperatures in the metallic substrate can therefore be conducted to and damage the sensitive control circuitry. Further, damage to components of the aerosol-generating device can also occur due to heat being radiated from excessively hot regions of the metallic substrate of the heater element.

It is therefore desired to provide an improved resistive heater element which has enhanced heat flow management and can better withstand forces which may be applied to the heater element during cleaning or operation (such as tensile, compressive or twisting forces) without fracturing.

WO 2020/142004 A1 relates to a heatable tobacco product and a tobacco unit for use with the heatable tobacco product.

According to a first aspect of the present disclosure, there is provided an elongate metallic heater element for use with an aerosol-generating device. The heater element extends between a proximal end and a distal end. The proximal end is configured for mounting to an aerosol-generating device for electrical communication with the aerosol-generating device. The heater element comprises either or both of: i) a plurality of surface notches formed on a surface of the heater element; and ii) a plurality of sub-surface cavities defined beneath the surface of the heater element. At least some of the plurality of surface notches and sub-surface cavities of the heater element are provided in an inner region of the heater element. The inner region extends between the proximal end and 33% of the length of the heater element relative to the proximal end. At least 40% by volume, or at least 50% by volume, or at least 60% by volume, or at least 70% by volume, or at least 80% by volume of all of the plurality of surface notches and sub-surface cavities of the heater element are provided in the inner region.

As used herein, the term "metallic" is used to mean formed predominantly or wholly of one or more metals. So, the term "metallic" encompasses specific metal elements or alloys.

As used herein, the term "aerosol-generating device" is used to describe a device that interacts with an aerosol-forming substrate of an aerosol-generating article to generate an aerosol. Preferably, the aerosol-generating device is a smoking device that interacts with an aerosol-forming substrate of an aerosol-generating article to generate an aerosol that is directly inhalable into a user's lungs thorough the user's mouth. The aerosol-generating device may be a holder for a smoking article. Preferably, the aerosol-generating article is a smoking article that generates an aerosol that is directly inhalable into a user's lungs through the user's mouth. More preferably, the aerosol-generating article is a smoking article that generates a nicotine-containing aerosol that is directly inhalable into a user's lungs through the user's mouth.

As used herein, the term "aerosol-forming substrate" denotes a substrate consisting of or comprising an aerosol-forming material that is capable of releasing volatile compounds upon heating to generate an aerosol.

The provision of the metallic heater element with a plurality of surface notches formed on a surface of the heater element reduces the rate of heat transfer through the heater element at the location of the surface notches compared to the same heater element lacking any such notches. The effect of forming notches in the metallic heater element is to remove thermally-conductive metal material from the heater element which would otherwise be present to conduct heat. Therefore, the rate of heat transfer and resulting temperatures in one or more regions of the heater element can be controlled by the presence of such surface notches in the vicinity of those one or more regions.

The provision of the metallic heater element with a plurality of sub-surface cavities may provide the same advantages described above for the surface notches. The use of sub-surface cavities may be particularly beneficial in maintaining flexural rigidity of the heater element, due to the inherent constraining effect of the metallic substrate material which would enclose each sub-surface cavity.

The use of surface notches or sub-surface cavities can be contrasted with the use of through-holes in the metallic heater element. The use of a surface notch or a sub-surface cavity of a given volume may maintain a higher level of flexural rigidity in the heater element compared to a through-hole having the same volume. As used herein, the term "through-hole" refers to where an opening extends through and between opposing surfaces of the heater element.

A surface notch would be an open feature, in that a notch would open onto a surface of the heater element. In contrast, a sub-surface cavity would be a closed feature, in that it would be enclosed and hidden from view beneath a surface of the heater element.

In summary, the use of a metallic heater element provided with a plurality of either or both surface notches and sub-surface cavities provides improved thermal management to the heater element. These advantages co-exist alongside the ductility which results from the heater element being formed of a metallic material. This inherent ductility reduces the likelihood of the heater element fracturing when subjected to tensile, compressive, or twisting forces during operational use or cleaning. Further, the surface notches and sub-surface cavities reduce the mass of the heater element compared to the same heater element lacking any such notches or cavities.

The distribution and size of the surface notches and sub-surface cavities may be selected and arranged to provide heat management and temperature control of one or more specific regions of the metallic heater element, whilst retaining sufficient flexural rigidity in the heater element to enable the element to withstand forces encountered during operational use and cleaning. For example, where the metallic heater element is intended to be inserted within the aerosol-forming substrate of an aerosol-generating article, the heater element should possess sufficient flexural rigidity to withstand insertion without the heater element buckling.

The individual notches and cavities may be defined by one or more curved surfaces. By way of example, the surface of a notch may correspond to part of the surface of a sphere or an ellipsoid. By way of further example, the enclosed surface of a cavity may correspond to the surface of a sphere or an ellipsoid. The use of notches and cavities which consist of curved surfaces also reduces the likelihood of individual notches and cavities acting as mechanical stress-raising features when the heater element is subjected to tensile, compressive or twisting forces. However, other shapes for the notches and cavities may also be employed. By way of example, the surface notches may be circular in plan, each defining a cylindrical bore extending into the surface of the heater element. Alternatively, the surface notches may be hexagonal in plan, defining a hexagonal-shaped bore extending into the surface of the heater element.

The heater element may comprise a metallic substrate and one or more resistive heating tracks, the one or more resistive heating tracks arranged on the metallic substrate. In turn, the plurality of surface notches and sub-surface cavities of the heater element may be formed on or within the metallic substrate. In use, electric current may be fed to the one or more resistive heating tracks of the heater element via the proximal end of the heater element. The flow of electric current along the one or more resistive tracks results in heating of the tracks by resistance heating (also known as Ohmic heating or Joule heating).

Metallic materials of the metallic heater element may include titanium or stainless steel. Further, Inconel ^{®} alloy 617 may also be suitable, possessing a combination of high temperature strength and oxidation resistance. For Inconel ^{®} alloy 617, the nickel and chromium content provides oxidation resistance, with the aluminium and nickel content also imparting high temperature oxidation resistance. By way of example, the heater element may take the form of a metallic substrate formed of titanium, stainless steel or Inconel ^{®} alloy 617, with one or more resistive heating tracks arranged on one or more surfaces of the substrate. Other metallic materials may be used for the metallic heater element, with the materials chosen dependent upon factors which can include flexural rigidity, thermal conductivity, oxidation resistance and chemical reactivity.

The plurality of surface notches and sub-surface cavities of the heater element may occupy a cumulative volume of between 15% to 30% of the volume of a corresponding heater element free of any such notches and cavities. As used herein, the term "cumulative volume" refers to the summation of the volume occupied by all of the surface notches and sub-surface cavities formed in the heater element. In general, the greater the cumulative volume of the heater element which is occupied by the surface notches or sub-surface cavities, the greater the corresponding reduction in conductive heat transfer through the metallic heater element during use. However, the greater the cumulative volume occupied by the notches or cavities, the less the flexural rigidity of the heater element. Confining the cumulative volume to between 15% to 30% provides a balance between the two conflicting desires of i) reducing excessive heat flow and resulting high temperatures in the metallic heater element, and ii) retaining sufficient flexural rigidity in the heater element to enable the element to withstand axial compressive forces without simply buckling. Conveniently however, the plurality of surface notches and sub-surface cavities of the heater element may occupy a cumulative volume of between 17% to 26% of the volume of a corresponding heater element free of any such notches and cavities.

The heater element may be entirely free of any through-holes extending through a thickness of the heater element. In contrast with the surface notches and sub-surface cavities, a "through-hole" would extend all the way through and between opposing surfaces of the heater element.

Alternatively however, the heater element may further comprise a plurality of through-holes extending through a thickness of the heater element. In this manner, the heater element may include a combination of different categories of features which correspond to removal of metallic material from the metallic heater element to provide improved thermal management of the heater element in use. For example, the heater element may include a plurality of through-holes alongside either a plurality of surface notches, or a plurality of sub-surface cavities. Alternatively, the heater element may include all of a plurality of through-holes, a plurality of surface notches and a plurality of sub-surface cavities. The plurality of through-holes may be distributed along the length of the heater element. Individual through-holes may allow for the flow of air across the heater element during use.

The plurality of surface notches and sub-surface cavities of the heater element may be formed to define one or more honeycomb arrangements. As used herein, the term "honeycomb arrangement" refers to a repeating pattern of the notches or cavities. The honeycomb arrangement may be two-dimensional; for example, the honeycomb arrangement may be defined by a discrete layer of surface notches or sub-surface cavities extending along two axes orthogonal to each other. Alternatively, the honeycomb arrangement may be three-dimensional. The use of such a honeycomb arrangement ensures that the region of the heater element in which the honeycomb arrangement is situated has near uniform thermal and structural properties.

The heater element may comprise the plurality of surface notches and be entirely free of any sub-surface cavities. Alternatively, the heater element may comprise the plurality of sub-surface cavities and be entirely free of any surface notches.

At least some of the plurality of surface notches and sub-surface cavities of the heater element are provided in an inner region of the heater element, the inner region extending between the proximal end and 33% of the length of the heater element relative to the proximal end. As the proximal end is configured for mounting to an aerosol-generating device, ensuring that the inner region of the heater element contains at least some of the surface notches and sub-surface cavities may help to avoid overheating of electronic components of the aerosol-generating device located adjacent to the proximal end. As control electronics of the aerosol-generating device will often be located at or close to the proximal end of the heater element, providing notches or cavities in the inner region of the heater element can avoid excessive temperatures developing in this region of the heater element and in neighbouring components of the aerosol-generating device. At least 40% by volume, or at least 50% by volume, or at least 60% by volume, or at least 70% by volume, or at least 80% by volume of all of the plurality of surface notches and sub-surface cavities of the heater element are provided in the inner region. The provision of such a high volumetric proportion of surface notches and/or surface cavities provides a barrier to conductive heat transfer through the metallic material of the heater element in the inner region and thereby enhances thermal protection to components of the aerosol-generating device in close proximity to the inner region of the heater element. In one example, all of the plurality of surface notches and sub-surface cavities of the heater element may be provided in the inner region of the heater element.

Where at least some of the plurality of surface notches and sub-surface cavities of the heater element are provided in the inner region of the heater element (as described in the preceding paragraph), the surface notches and sub-surface cavities of the inner region may extend laterally across at least 90%, or at least 95% of the lateral width of the heater element. Such an arrangement of notches or cavities helps to provide a barrier to conductive heat transfer through the metallic substrate close to the proximal end, with the barrier extending across nearly all of the lateral width of the heater element.

Where some of the plurality of surface notches and sub-surface cavities of the heater element are provided in the inner region of the heater element (as described in the preceding paragraphs), some of the plurality of surface notches and sub-surface cavities of the heater element may also be provided in a middle region of the heater element, the middle region extending between 33% and 90% of the length of the elongate heater element relative to the proximal end. Including surface notches or sub-surface cavities in the middle region of the heater element in addition to those in the inner region may provide a more gradual change in heat transfer rate through the heater element when progressing from one region of the heater element to another. Ensuring such gradual changes in heat transfer rate through the heater element may be beneficial in avoiding excessive thermal stresses being developed in the metallic material of the heater element.

The heater element may extend along a longitudinal axis and laterally outwards from the longitudinal axis to define a blade having opposed first and second elongate surfaces. Providing the heater element in the form of a blade makes the element particularly suitable for insertion through and within the aerosol-forming substrate of an aerosol-generating article. The heater element may further comprise a resistive heating track arranged on the first elongate surface, the heater element comprising a plurality of the surface notches on the second elongate surface, in which the surface notches on the second elongate surface form at least 80% by volume of all of the plurality of surface notches of the heater element. The second elongate surface may be free of any resistive heating track. As discussed in preceding paragraphs, the passage of electric current along the resistive heating track would result in resistive heating of the track. The first elongate surface may be substantially free of surface notches. By way of example, any surface notches of the heater element may instead be provided on the second elongate surface.

The plurality of surface notches and sub-surface cavities of the heater element may be arranged in one or more laterally-symmetric groups. The one or more laterally-symmetric groups may comprise a first group, a second group and a third group. The first group may be symmetrically disposed about the longitudinal axis and extend laterally across at least 90%, or at least 95% of the lateral width of the heater element in an inner region of the heater element. The inner region may extend between the proximal end and 33% of the length of the heater element relative to the proximal end. The second and third groups may be symmetrically disposed from each other on either side of the longitudinal axis in a middle region of the heater element, the middle region extending between 33% and 90% of the length of the heater element relative to the proximal end. The second and third groups may be axially spaced from the first group. The second and third groups may join each other at the longitudinal axis.

Preferably, the heater element is configured to be removably mountable to the aerosol-generating device. In this way, the heater element can be removed for cleaning before being remounted. Further, the heater element may be removed and swapped with a replacement heater element.

In a second aspect of the present disclosure, there is provided an aerosol-generating device configured to receive an aerosol-forming substrate. The aerosol-generating device comprises an elongate metallic heater element as described in relation to the first aspect of the present disclosure. The aerosol-generating device also comprises a power source. The proximal end of the heater element is mounted to a mounting location of the aerosol-generating device. The power source is in electrical communication with the heater element so as to, in use, resistively heat the heater element.

The power source is preferably in the form of a battery, thereby providing a source of electrical power to the aerosol-generating device and helping to make the device portable. Conveniently, the battery is rechargeable; by way of example, a lithium ion battery may be used as the power source.

The aerosol-generating device may be configured such that, in use with an aerosol-forming substrate received in the device, the heater element extends within the aerosol-forming substrate to heat the aerosol-forming substrate and generate an inhalable aerosol therefrom. By way of example, the heater element may be formed as a blade as described in the preceding paragraphs. The distal end of the blade may terminate in a point, thereby assisting in entry of the blade into the aerosol-generating substrate. One or more longitudinal edges of the blade may also be sharpened.

Preferably, the aerosol-forming substrate is a solid aerosol-forming substrate. However, the aerosol-forming substrate may comprise both solid and liquid components. Alternatively, the aerosol-forming substrate may be a liquid aerosol-forming substrate.

Preferably, the aerosol-forming substrate comprises nicotine. More preferably, the aerosol-forming substrate comprises tobacco. Alternatively or in addition, the aerosol-forming substrate may comprise a non-tobacco containing aerosol-forming material.

If the aerosol-forming substrate is a solid aerosol-forming substrate, the solid aerosol-forming substrate may comprise, for example, one or more of: powder, granules, pellets, shreds, strands, strips or sheets containing one or more of: herb leaf, tobacco leaf, tobacco ribs, expanded tobacco and homogenised tobacco.

Optionally, the solid aerosol-forming substrate may contain tobacco or non-tobacco volatile flavour compounds, which are released upon heating of the solid aerosol-forming substrate. The solid aerosol-forming substrate may also contain one or more capsules that, for example, include additional tobacco volatile flavour compounds or non-tobacco volatile flavour compounds and such capsules may melt during heating of the solid aerosol-forming substrate.

Optionally, the solid aerosol-forming substrate may be provided on or embedded in a thermally stable carrier. The carrier may take the form of powder, granules, pellets, shreds, strands, strips or sheets. The solid aerosol-forming substrate may be deposited on the surface of the carrier in the form of, for example, a sheet, foam, gel or slurry. The solid aerosol-forming substrate may be deposited on the entire surface of the carrier, or alternatively, may be deposited in a pattern in order to provide a non-uniform flavour delivery during use.

In a preferred embodiment, the aerosol-forming substrate comprises homogenised tobacco material. As used herein, the term "homogenised tobacco material" refers to a material formed by agglomerating particulate tobacco.

Preferably, the aerosol-forming substrate comprises a gathered sheet of homogenised tobacco material. As used herein, the term "sheet" refers to a laminar element having a width and length substantially greater than the thickness thereof. As used herein, the term "gathered" is used to describe a sheet that is convoluted, folded, or otherwise compressed or constricted substantially transversely to the longitudinal axis of the aerosol-generating article.

Preferably, the aerosol-forming substrate comprises an aerosol former. As used herein, the term "aerosol former" is used to describe any suitable known compound or mixture of compounds that, in use, facilitates formation of an aerosol and that is substantially resistant to thermal degradation at the operating temperature of the aerosol-generating article.

Suitable aerosol-formers are known in the art and include, but are not limited to: polyhydric alcohols, such as propylene glycol, triethylene glycol, 1,3-butanediol and glycerine; esters of polyhydric alcohols, such as glycerol mono-, di- or triacetate; and aliphatic esters of mono-, di- or polycarboxylic acids, such as dimethyl dodecanedioate and dimethyl tetradecanedioate. Preferred aerosol formers are polyhydric alcohols or mixtures thereof, such as propylene glycol, triethylene glycol, 1,3-butanediol and, most preferred, glycerine.

The aerosol-forming substrate may comprise a single aerosol former. Alternatively, the aerosol-forming substrate may comprise a combination of two or more aerosol formers.

In a third aspect of the present disclosure, there is provided a method of manufacturing a heater element. The method comprises providing a metallic substrate and forming either or both of i) a plurality of surface notches on a surface of the metallic substrate; and ii) a plurality of sub-surface cavities defined beneath the surface of the metallic substrate.

A plurality of metallic blanks may first be cut from a sheet of the metallic material, with each blank forming the "metallic substrate" for a given heater element. Conveniently, the surface notches and sub-surface cavities may be formed in the sheet of metallic material prior to cutting the sheet into individual blanks. Alternatively, the surface notches and sub-surface cavities may be formed in each blank after being cut from the sheet of metallic material.

Advantageously, the forming step may comprise etching of the metallic substrate to form the plurality of surface notches. By way of example, a chemical or mechanical etching process may be used to form the notches in the surface of the substrate. Chlorine etching is an example of a suitable chemical etching process. Mechanical etching may take the form of the notches being machined into the surface of the substrate.

Preferably, the manufactured heater element resulting from the method is in accordance with the metallic heater element described in the preceding paragraphs in relation to the first aspect of the present disclosure.

In a fourth aspect of the present disclosure, there is provided a method of manufacturing a heater element. The method comprises providing a supply of metallic material; additively manufacturing the heater element from the supply of metallic material to progressively form the heater element to comprise either or both of: i) a plurality of surface notches on a surface of the heater element; and ii) a plurality of sub-surface cavities defined beneath the surface of the heater element.

The use of additive manufacturing to form the heater element is particularly beneficial in enabling the formation of hidden structural features, such as the sub-surface cavities. By way of example, the metallic material may be provided in powder form, or alternatively as a slurry of powder and liquid. Conveniently, the additive manufacturing step may comprise three-dimensional screen printing.

Preferably, the manufactured heater element resulting from the method is in accordance with the metallic heater element described in the preceding paragraphs in relation to the first aspect of the present disclosure.

The invention is defined in the claims.

Examples will now be further described with reference to the figures, in which:
Figure 1 is a schematic view of the components of an aerosol-delivery system.
Figure 2a is a perspective view from above of a heater element used in an aerosol-generating device of the aerosol-delivery system of figure 1, in which a plurality of surface notches are defined on a surface of the heater element.
Figure 2b is a perspective view from below of the heater element of figure 2a.
Figure 3a is a detail plan view of a portion of the upper surface of an exemplary heater element in accordance with the present disclosure, in which the heater element is provided with an arrangement of surface notches which are circular in plan and extend into the upper surface of the heater element to form notches which are part-spherical in form.
Figure 3b is a sectional view along section B-B of the heater element portion of figure 3a.
Figure 4a is a detail plan view of the upper surface of a portion of another exemplary heater element in accordance with the present disclosure, in which the heater element is provided with an arrangement of surface notches which are circular in plan with a cylindrical bore extending into the upper surface of the heater element.
Figure 4b is a sectional view along section C-C of the heater element portion of figure 4a, showing how the cylindrical bore of each surface notch extends into the upper surface of the heater element.
Figure 5a is a detail plan view of the upper surface of a portion of another exemplary heater element in accordance with the present disclosure, in which the heater element is provided with an arrangement of surface notches which are hexagonal in plan with a hexagonal bore extending into the upper surface of the heater element.
Figure 5b is a sectional view along section D-D of the heater element portion of figure 5a, showing how the hexagonal bore of each surface notch extends into the upper surface of the heater element.
Figure 6a is a detail plan view of the upper surface of a portion of another exemplary heater element in accordance with the present disclosure, in which the heater element is provided with an arrangement of surface notches which are hexagonal in plan with a hexagonal bore extending into the upper surface of the heater element.
Figure 6b is a detail plan view of the lower surface of the portion of the heater element of figure 6a, in which both a resistive heating track and an arrangement of surface notches which are hexagonal in plan are provided on the lower surface of the heater element.
Figure 6c is a sectional view along section E-E of the heater element portion of figures 6a and 6b, showing how the hexagonal bore of the surface notches extends into both the upper and lower surfaces of the heater element.
Figure 7a is a detail plan view of the upper surface of a portion of another exemplary heater element in accordance with the present disclosure, in which the heater element is provided with an arrangement of sub-surface cavities which are spherical in form.
Figure 7b is a sectional view along section F-F of the heater element portion of figure 7a, showing how the cavities are arranged in a single sub-surface layer embedded within the heater element.
Figure 8 is a sectional view of a variation to the heater element of figures 7a and 7b (along section F-F), in which the heater element is provided with an arrangement of three layers of sub-surface cavities embedded within the heater element.
Figure 9 is a sectional view of another heater element, being a combination of the examples of figures 5a,b and 7a,b in that an arrangement of surface notches which are hexagonal in plan is provided on an upper surface of the heater element and an arrangement of spherical sub-surface cavities is provided as a single layer embedded within the heater element.
Figure 10 is a perspective view of five different heater elements, each having different arrangements of surface notches.
Figure 11 is a schematic view of a machining assembly for manufacturing multiple heater elements from a sheet of metallic substrate.

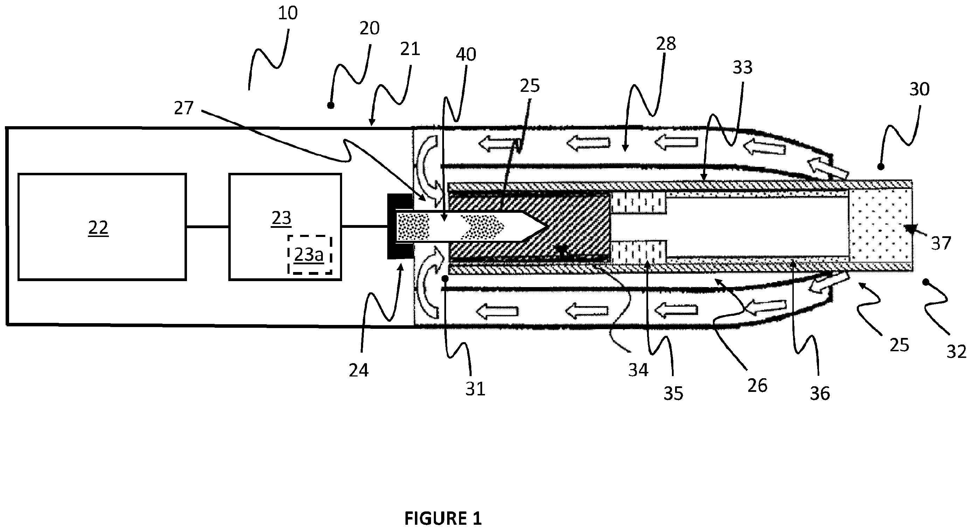

Figure 1 is a schematic view of an aerosol-delivery system 10. The aerosol-generating system 10 is a smoking system for generating an inhalable aerosol. The system 10 is formed of a combination of an aerosol-generating device 20 and an aerosol-generating article 30.

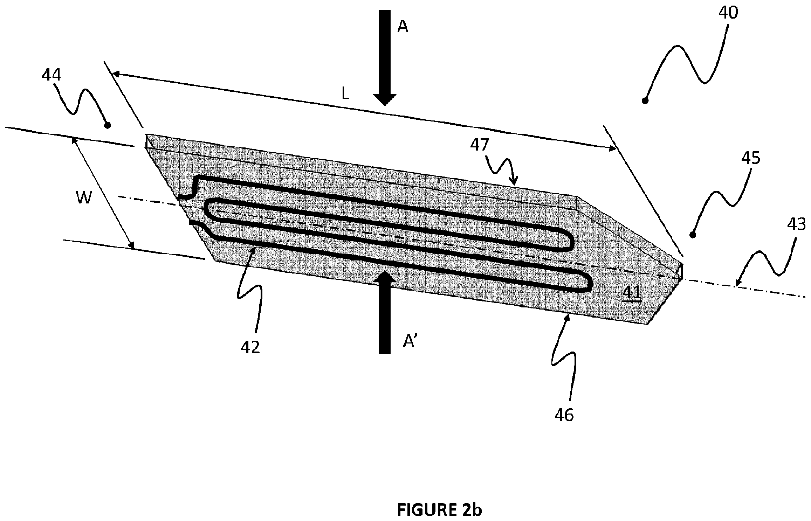

The aerosol-generating device 20 has an elongate housing 21 formed of a polymer material. The elongate housing 21 contains a power source 22, a controller 23 and a mounting location 24. A metallic heater element 40 is detachably mounted to the mounting location 24 by use of a push-fit connection. The heater element 40 is formed of a metallic substrate 41 and has a resistive heating track 42 overlaid on a surface of the substrate (see, for example, figure 2b). The structure of the heater element 40 is described in more detail in subsequent paragraphs. The heater element 40 is mounted to the mounting location 24 so that the resistive heating track 42 is electrically coupled to the mounting location. An access opening 25 is provided at one end of the elongate housing 21. A blind cavity 26 extends from the access opening 25 into the interior of the elongate housing 21. The heater element 40 extends from a closed end 27 of the blind cavity 26 towards the access opening 25.

The aerosol-generating article 30 is cylindrical in form and extends between a distal end 31 and a mouth end 32. The aerosol-generating article 30 has a wrapper 33. The wrapper 33 is in the form of a cigarette paper. A plug of aerosol-forming substrate 34, a hollow acetate tube 35, a tubular spacer element 36 and a mouthpiece filter 37 are co-axially and sequentially arranged within the wrapper 33. The aerosol-generating article 30 is received within the blind cavity 26 such that the heater element 40 inserts within the plug of aerosol-forming substrate 34.

For the aerosol-generating device 20, the power source 22 is coupled to the controller 23 to provide power thereto. For the example shown, the power source 22 is a rechargeable lithium ion battery. The controller 23 is coupled to the mounting location 24 to provide electric current to the mounting location 24 and thereby to the resistive heating track 42 of the heater element 40. The controller 23 is in the form of control electronics and incorporates a memory module 23a. The memory module 23a contains instructions accessible by a processor (not shown) of the controller 23 to control the supply of electric current to the resistive heating track 42 of the heater element 40. Electric current fed from the controller 23 to the mounting location 24 results in resistive heating of the resistive heating track 42. Some of the heat generated by the resistive heating track 42 is conducted into the underlying metallic substrate 41 of the heater element 40.

In use, heat generated by the heater element 40 is conveyed to the plug of aerosol-forming substrate 34. The heating of the aerosol-forming substrate 34 results in vapours being evolved from the aerosol-forming substrate. In response to a user drawing on the mouth end 32 of the article 30, a flow of ambient air (as indicated by arrows in figure 1) is sucked into an air passageway 28 circumferentially arranged between the elongate housing 21 and the blind cavity 26. The flow of air then enters the distal end 31 of the aerosol-generating article 30 and passes through the plug of aerosol-forming substrate 34 to mix with the vapours evolved from the aerosol-forming substrate. The vapour mixture then passes downstream through the interior of the aerosol-generating article 30 towards the mouth end 32, during which time the vapour condenses to form aerosol. The aerosol passes through the mouthpiece filter 37, from where it is inhaled into the lungs of the user.

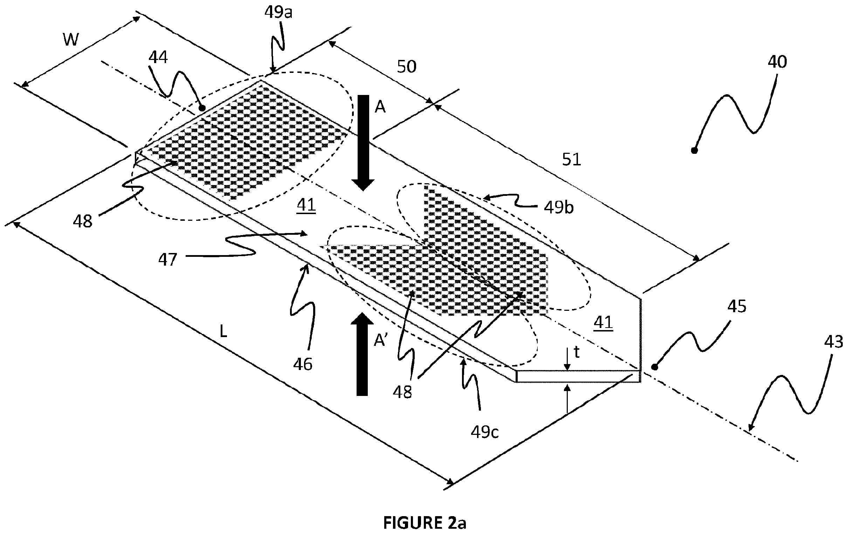

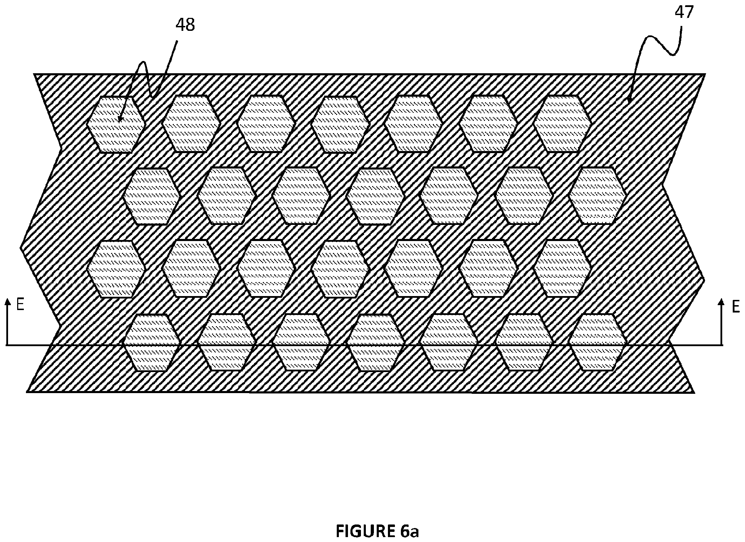

Figures 2a and 2b show perspective views from of the upper and lower surfaces respectively of the heater element 40 used in the aerosol-delivery system 10 of figure 1. The terms "upper" and "lower" are used in a relative sense only. As stated above, the heater element 40 is formed of a metallic substrate 41. The metallic substrate 41 is titanium or stainless steel. However, in alternative examples, the metallic substrate 41 may be formed of other metals or alloys. The resistive heating track 42 is overlaid on a surface of the metallic substrate 41 (see figure 2b). For the example shown in figures 2a and 2b, the resistive heating track 42 is in the form of fine metal wire deformed into a coil shape. However, in alternative examples (not shown), the resistive heating track 41 may take other forms, such as being a metal sheet which has been stamped or otherwise formed into a coil-shaped pattern. The metallic substrate 41 of the heater element 40 extends longitudinally along axis 43 between proximal end 44 and distal end 45, plus laterally outwards from the axis to define a blade-shaped profile for the heater element 40. The heater element 40 is detachably mounted to the mounting location 24 at proximal end 44. First and second planar surfaces 46, 47 define respective lower and upper surfaces of the metallic substrate 41. The resistive heating track 42 is arranged on the lower surface 46 (see figure 2b). A plurality of surface notches 48 are formed on the upper surface 47. The surface notches 48 extend partially through the thickness, t, of the metallic substrate 41. The plurality of surface notches 48 are arranged in three groups 49a,b,c. Group 49a of surface notches 48 are provided in an inner region 50 of the heater element 40, the inner region extending between the proximal end 44 and approximately 33% of the length, L, of the heater element relative to the proximal end. For the example shown in figure 2a, approximately 40% of all of the surface notches 48 formed on the heater element 40 are located in this inner region 50 in group 49a. Groups 49b and 49c contain the remaining 60% of the surface notches 47 formed on the heater element 40, with both groups being laterally symmetric about axis 43 in a middle region 51 of the heater element. The middle region 51 extends between 33% and 90% of the length, L, of the heater element 40 relative to the proximal end 44. These two laterally symmetric groups 49b and 49c of surface notches 48 join at axis 43 to define an arrowhead shape when viewed in plan, i.e. in the direction of arrow A. The surface notches 48 of group 49a extend across in excess of 95% of the lateral width, W, of the heater element 40. For the heater element 40 of figures 2a and 2b, no surface notches 48 are defined on the lower surface 46 of the metallic substrate 41. However, in alternative examples (such as the exemplary heater element of figures 6a-c, discussed in subsequent paragraphs), a plurality of surface notches 48 is also provided on the lower surface 46 of the metallic substrate 41.

For the heater element of figures 2a and 2b, the surface notches 48 defined on the heater element 40 occupy a cumulative volume of ~18% of a corresponding heater element free of any such notches. This provides ~18% mass reduction relative to such a corresponding heater element free of any such notches. In alternative examples, the surface notches 48 occupy a larger or smaller cumulative volume according to the degree of heat flow management desired. Further, in alternative examples (not shown), the distribution of surface notches 48 along the length, L, and across the width, W, of the heater element 40, and the proportion of surface notches 48 in the inner and middle regions 50, 51 may differ from that shown and discussed for the heater element of figures 2a and 2b.

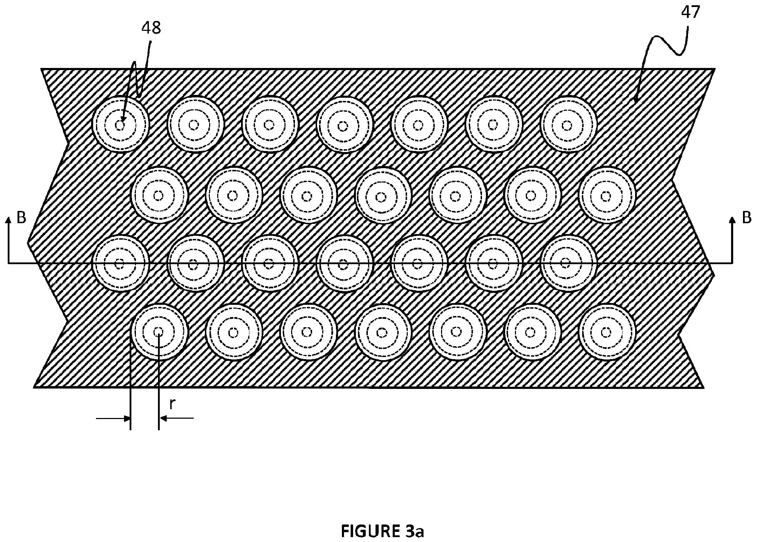

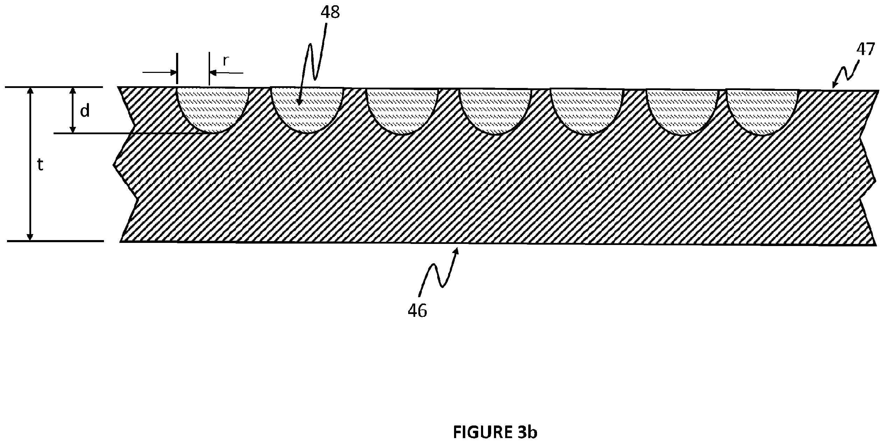

Figures 3 to 9 show views of portions of various exemplary heater elements 40 having differing arrangements of surface notches or sub-surface cavities to the heater element illustrated in figures 2a,b. For convenience, features common to the various exemplary heater elements 40 are referred to using like reference signs.

Figure 3a is a plan view (in the direction of arrow A of figure 2a) of the upper surface 47 of a portion of an exemplary heater element 40. A plurality of surface notches 48 are formed on the upper surface 47 of the metallic substrate 41. The surface notches 48 are circular in plan, being of radius, r. The surface notches 48 are formed in a repeating honeycomb-type pattern, in which adjacent rows of the notches are offset from each other. As shown in the sectional view of figure 3b, each of the surface notches 48 extends into the upper surface 47 of the metallic substrate 41 to provide a notch surface profile which is part-spherical. Each notch 48 extends part way through the thickness, t, of the substrate 41 for a depth, d (see figure 3b). As the notch surface profile is part-spherical, the depth d equates to radius r. In alternative examples (not shown), the surface profile of the notches 48 is ellipsoidal. In further alternative examples (not shown), the dimensions of the notches 48 are varied in different regions of the heater element 40. Further, the spacing between adjacent notches 48 may be varied in different regions of the heater element 40. By way of example, with reference to figure 2a, the notches 48 in inner region 50 may be larger or spaced closer together than those in middle region 51. Such variation in notch dimensions and spacing between adjacent notches 48 in different regions of the heater element 40 can be used to provide different levels of thermal conductivity in those different regions.

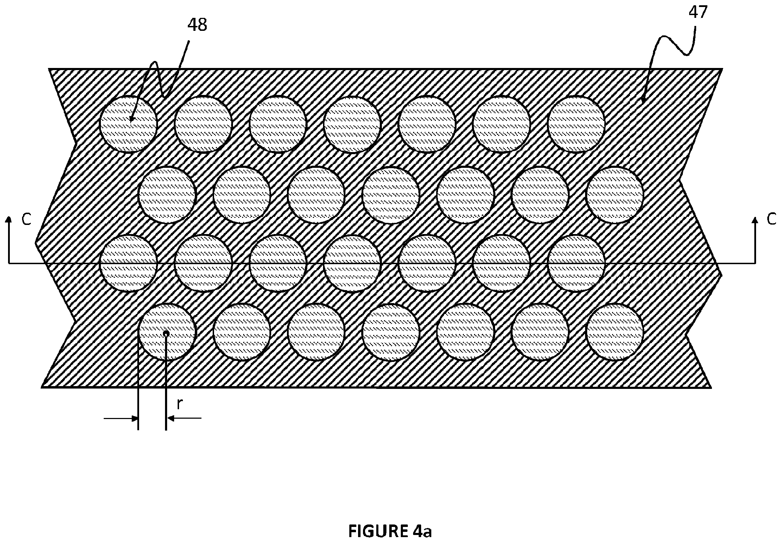

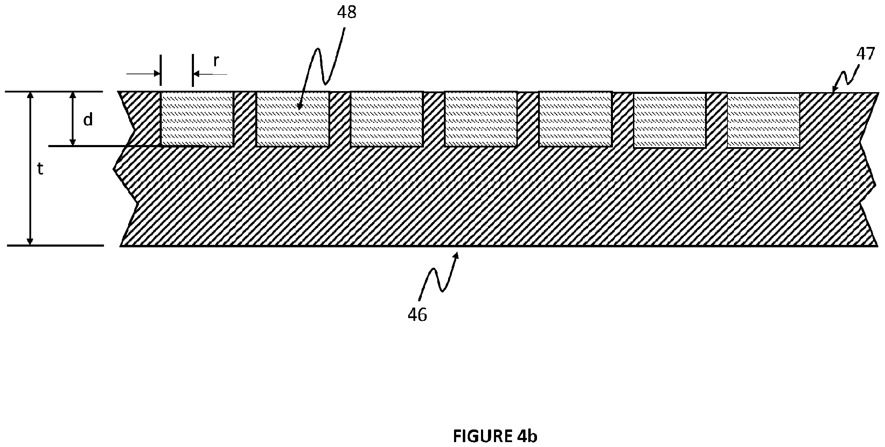

Figure 4a is a plan view (in the direction of arrow A of figure 2a) of the upper surface of a portion of another exemplary heater element 40. A plurality of surface notches 48 are formed on the upper surface 47 of the metallic substrate 41. In common with the example of figures 3a,b, the surface notches 48 are circular in plan, being of radius, r, and formed in a repeating honeycomb-type pattern, in which adjacent rows of the notches are offset from each other. However, as shown in the sectional view of figure 4b, each of the surface notches 48 has a cylindrical bore which extends into the upper surface 47 of the metallic substrate 41 to provide a notch surface profile which is cylindrical. Each notch 48 extends part way through the thickness, t, of the substrate 41 for a depth, d (see figure 4b). In alternative examples (not shown), the dimensions of the notches 48 are varied in different regions of the heater element 40. Further, the spacing between adjacent notches 48 may be varied in different regions of the heater element 40. By way of example, with reference to figure 2a, the notches 48 in inner region 50 may be larger or spaced closer together than those in middle region 51. Such variation in notch dimensions and spacing between adjacent notches 48 in different regions of the heater element 40 can be used to provide different levels of thermal conductivity in those different regions.

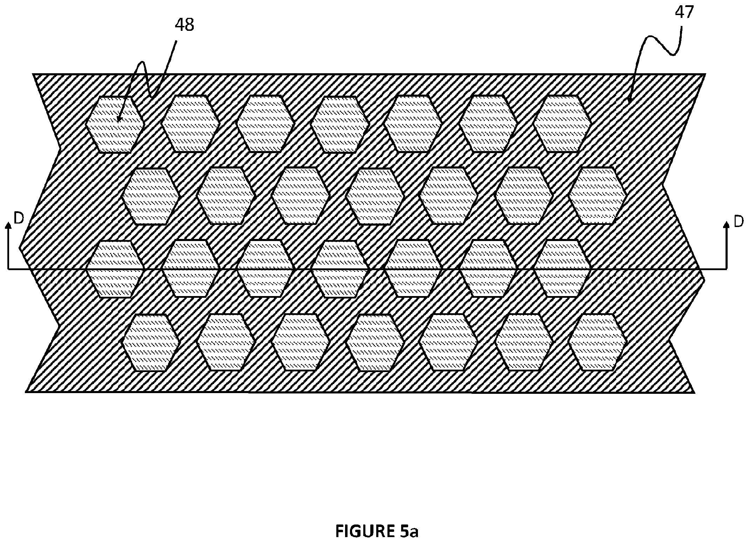

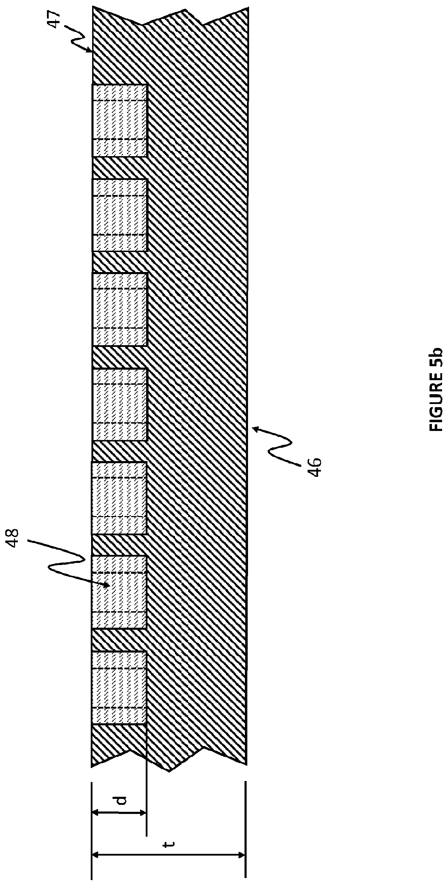

Figure 5a is a plan view (in the direction of arrow A of figure 2a) of the upper surface 47 of a portion of an exemplary heater element 40. A plurality of surface notches 48 are formed on the upper surface 47 of the metallic substrate 41. The surface notches 48 are hexagonal in plan. The surface notches 48 are formed in a repeating honeycomb-type pattern, in which adjacent rows of the notches are offset from each other. As shown in the sectional view of figure 5b, each of the surface notches 48 has a hexagonal bore which extends into the upper surface 47 of the metallic substrate 41. Each notch 48 extends part way through the thickness, t, of the substrate 41 for a depth, d (see figure 5b). In alternative examples (not shown), the dimensions of the notches 48 are varied in different regions of the heater element 40. Further, the spacing between adjacent notches 48 may be varied in different regions of the heater element 40. By way of example, with reference to figure 2a, the notches 48 in inner region 50 may be larger or spaced closer together than those in middle region 51. Such variation in notch dimensions and spacing between adjacent notches 48 in different regions of the heater element 40 can be used to provide different levels of thermal conductivity in those different regions.

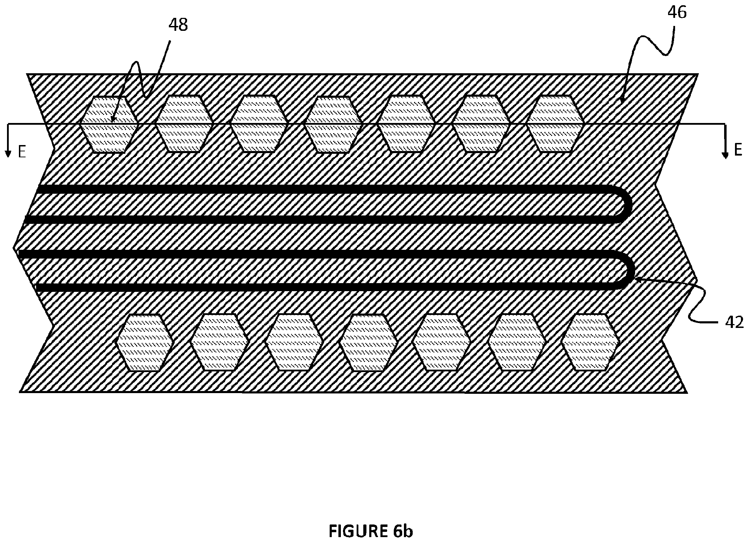

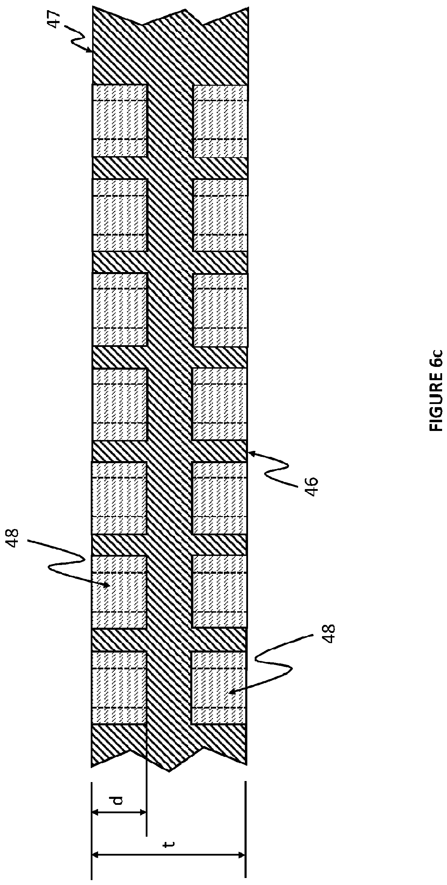

Figure 6a is a plan view (in the direction of arrow A of figure 2a) of the upper surface 47 of a portion of an exemplary heater element 40. The notch arrangement on the upper surface 47 is identical to that of the heater element 40 of figure 5a, with a plurality of surface notches 48 formed on the upper surface of the metallic substrate 41. The surface notches 48 are hexagonal in plan and formed in a repeating honeycomb-type pattern, in which adjacent rows of the notches are offset from each other. However, the heater element of this example differs from that of figures 5a,b in that an arrangement of surface notches 48 are also provided on the lower surface 46 of the metallic substrate 41. As for the notches on the upper surface 47, the notches on the lower surface 46 are hexagonal in plan. However, the notches 48 on the lower surface 46 are fewer in number than those on the upper surface 47. As can be seen in figure 6b, the notches 48 on the lower surface 46 are positioned on either side of the resistive heating track 42. As shown in the sectional view of figure 6c, each notch 48 extends part way through the thickness, t, of the substrate 41 for a depth, d. In alternative examples (not shown), the dimensions of the notches 48 are varied in different regions of the heater element 40. Further, the spacing between adjacent notches 48 may be varied in different regions of the heater element 40. By way of example, with reference to figure 2a, the notches 48 in inner region 50 may be larger or spaced closer together than those in middle region 51. Such variation in notch dimensions and spacing between adjacent notches 48 in different regions of the heater element 40 can be used to provide different levels of thermal conductivity in those different regions.

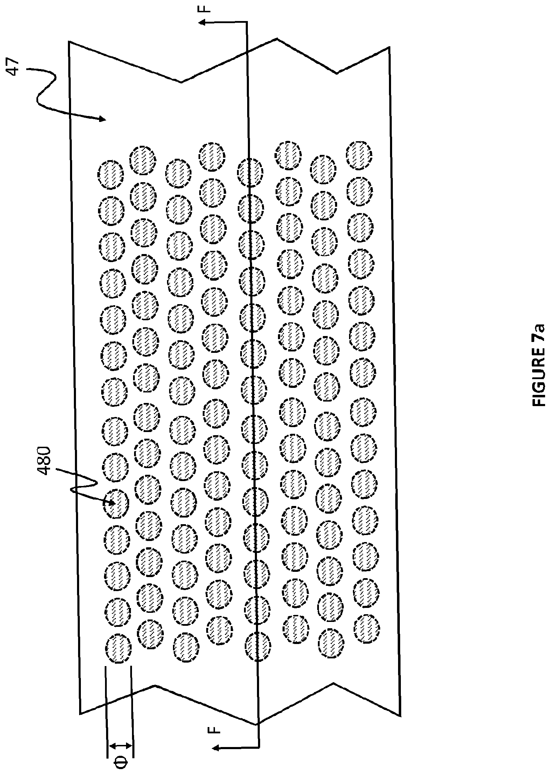

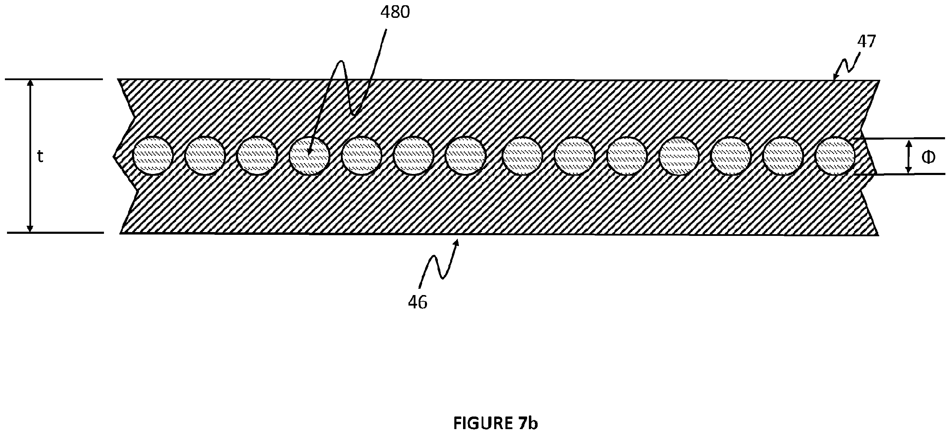

Figure 7a is a plan view (in the direction of arrow A of figure 2a) of the upper surface 47 of a portion of an exemplary heater element 40. In contrast to the exemplary heater elements 40 of figures 3 to 6, no surface notches 48 are provided on the metallic substrate. Rather, a layer of spherical sub-surface cavities 480 is embedded within the metallic substrate 41, each cavity having diameter, Φ (see the sectional view of figure 7b). The outline of these sub-surface cavities 480 is shown with a dashed line in the plan view of figure 7a. The sub-surface cavities 480 are formed in a repeating honeycomb-type pattern, in which adjacent rows of the embedded cavities 480 are offset from each other (see figure 7a). In alternative examples (not shown), the sub-surface cavities 480 are ellipsoidal in form. In further alternative examples (not shown), the dimensions of the sub-surface cavities 480 are varied in different regions of the heater element 40. Further, the spacing between adjacent cavities 480 may be varied in different regions of the heater element 40. By way of example, with reference to figure 2a, sub-surface cavities 480 in inner region 50 may be larger or spaced closer together than those in middle region 51. Such variation in cavity dimensions and spacing between adjacent sub-surface cavities 480 in different regions of the heater element 40 can be used to provide different levels of thermal conductivity in those different regions.

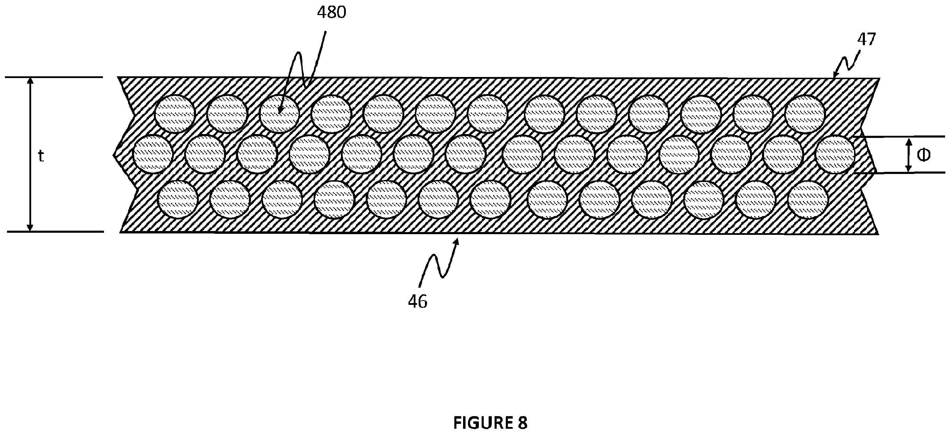

Figure 8 is a sectional view of a heater element 40 similar to that shown in figure 7b, but differing in that three layers of sub-surface cavities 480 are embedded within the metallic substrate 41. In alternative examples (not shown), where multiple layers of sub-surface cavities 480 are embedded within the metallic substrate 41, the layers may differ from each other in terms of the size or spacing of the cavities 480 in each layer.

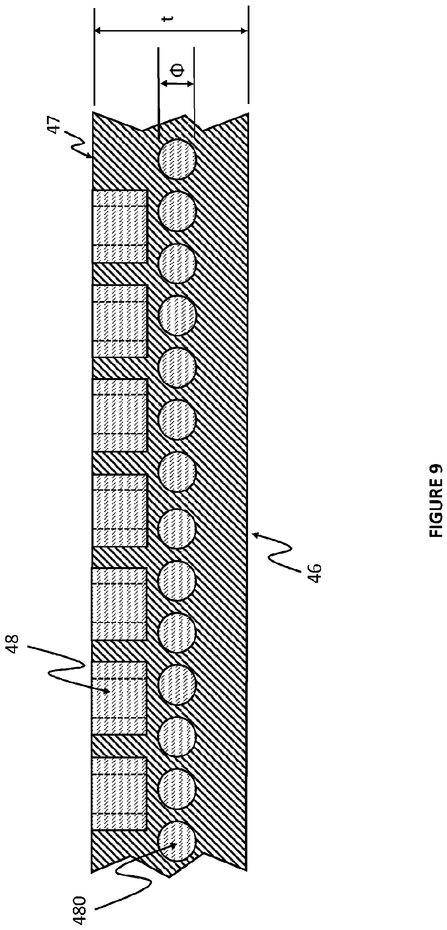

Figure 9 is a sectional view of a heater element 40 corresponding to a combination of the examples of figures 5a,b and 7a,b. As can be seen, an arrangement of surface notches 48 are formed on the upper surface 47 of the metallic substrate 41, the notches being hexagonal in plan (as per figure 5a). However, in addition, a layer of sub-surface cavities 480 is embedded in the metallic substrate 41 (as per figure 7a).

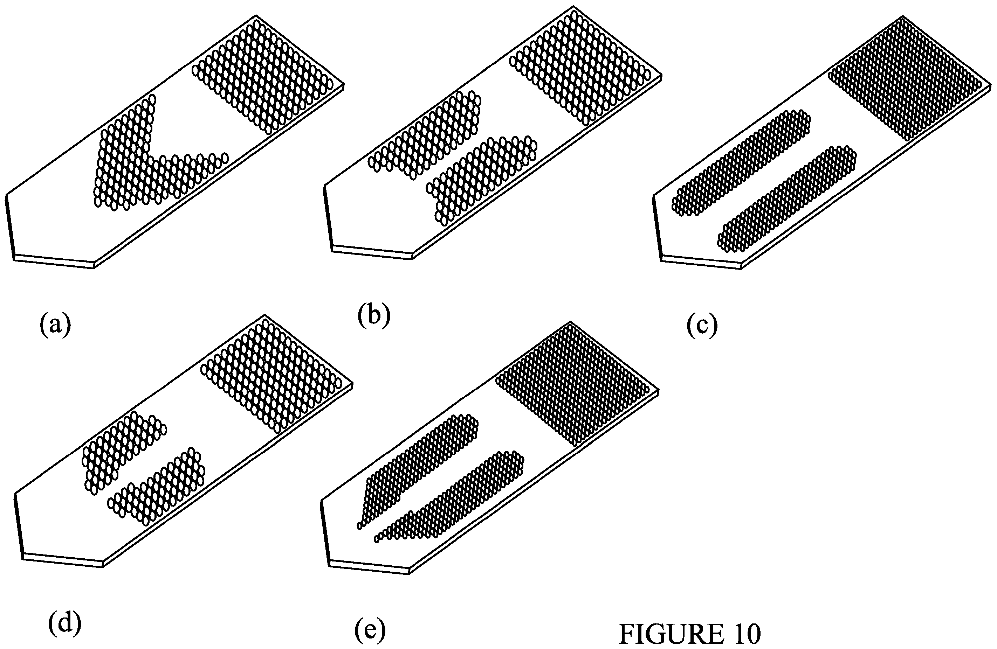

Figure 10 shows a perspective view of five different heater elements 40, each having different arrangements of surface notches 48.

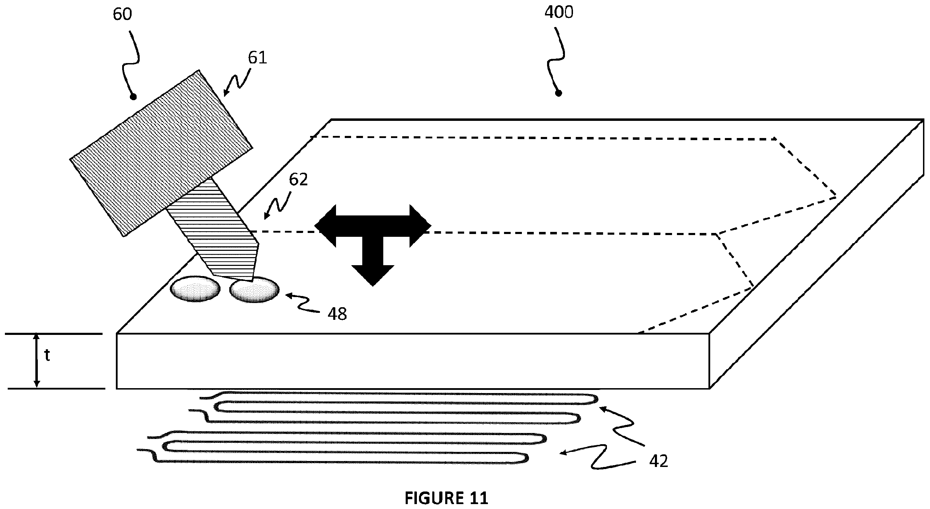

Figure 11 is a schematic view of a machining assembly 60 for manufacturing a heater element from a sheet 400 of the metallic substrate 41 material. The machining assembly 60 has a tool holder 61 holding a machining tool 62. The sheet 400 of metallic substrate is provided and secured in position relative to the machining assembly 60. The sheet 400 has a thickness corresponding to the desired thickness, t, of the heater elements 40 described in the previous paragraphs, but has a width and a length sufficient for multiple heater elements 40 to be formed from a single sheet 400. The machining assembly 60 operates the machining tool 62 to machine an individual surface notch 48 in the upper surface of the metal sheet 400 and then traverses (see arrows in figure 11) the tool holder 61 and machining tool 62 over the surface of the metal sheet 400 to repeat the machining operation at multiple desired locations. Once the machining operation is completed, resistive heater tracks 62 are arranged at predetermined intervals on the lower surface of the sheet 400. Individual heater elements 40 are then cut from the sheet 400, with dashed lines in figure 11 showing the outline of two such heater elements 40. In another example (not shown), the surface notches 48 are chemically etched in the surface of the metal sheet 400, rather than being mechanically formed.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein. In this context, therefore, a number "A" is understood as "A" ± 10% of "A". Within this context, a number "A" may be considered to include numerical values that are within general standard error for the measurement of the property that the number "A" modifies.

## Claims

1. An elongate metallic heater element (40) for use with an aerosol-generating device (20), the heater element (40) extending between a proximal end (44) and a distal end (45), the proximal end (44) configured for mounting to an aerosol-generating device (20) for electrical communication with the aerosol-generating device (20);
wherein the heater element (40) comprises either or both of:
i) a plurality of surface notches (48) formed on a surface of the heater element; and
ii) a plurality of sub-surface cavities (480) defined beneath the surface of the heater element;
in which at least some of the plurality of surface notches (48) and sub-surface cavities (480) of the heater element are provided in an inner region (50) of the heater element, the inner region (50) extending between the proximal end (44) and 33% of the length of the heater element relative to the proximal end (44), and in which at least 40% by volume, or at least 50% by volume, or at least 60% by volume, or at least 70% by volume, or at least 80% by volume of all of the plurality of surface notches (48) and sub-surface cavities (480) of the heater element are provided in the inner region (50).

2. An elongate metallic heater element (40) according to claim 1, in which the plurality of surface notches (48) and sub-surface cavities (480) of the heater element occupy a cumulative volume of between 15% to 30% of the volume of a corresponding heater element free of any such notches and cavities.

3. An elongate metallic heater element (40) according to claim 2, in which the plurality of surface notches (48) and sub-surface cavities (480) of the heater element occupy a cumulative volume of between 17% to 26% of the volume of a corresponding heater element free of any such notches and cavities.

4. An elongate metallic heater element (40) according to any one of claims 1 to 3, in which the heater element further comprises a plurality of through-holes extending through a thickness of the heater element

5. An elongate metallic heater element (40) according to any one of claims 1 to 4, in which the plurality of surface notches (48) and sub-surface cavities (480) of the heater element are formed to define one or more honeycomb arrangements.

6. An elongate metallic heater element (40) according to any one of claims 1 to 5, in which the heater element (40) comprises the plurality of surface notches (48) and is free of any sub-surface cavities.

7. An elongate metallic heater element (40) according to any one of claims 1 to 5, in which the heater element (40) comprises the plurality of sub-surface cavities (480) and is free of any surface notches.

8. An elongate metallic heater element (40) according to any one of claims 1 to 7, in which the surface notches (48) and sub-surface cavities (480) of the inner region (50) extend laterally across at least 90%, or at least 95% of the lateral width of the heater element.

9. An elongate metallic heater element (40) according to any one of claims 1 to 8, in which all of the plurality of surface notches (48) and sub-surface cavities (480) of the heater element are provided in the inner region (50) of the heater element.

10. An elongate metallic heater element (40) according to any one of claims 1 to 8, in which some of the plurality of surface notches (48) and sub-surface cavities (480) of the heater element are provided in a middle region (51) of the heater element, the middle region (51) extending between 33% and 90% of the length of the elongate heater element relative to the proximal end (44).

11. An elongate metallic heater element (40) according to any one of claims 1 to 10, in which the heater element extends along a longitudinal axis and laterally outwards from the longitudinal axis to define a blade having opposed first and second elongate surfaces (46, 47).

12. An elongate metallic heater element (40) according to claim 11, the heater element further comprising a resistive heating track (42) arranged on the first elongate surface (46), the heater element comprising a plurality of the surface notches (48) on the second elongate surface (47), in which the surface notches on the second elongate surface form at least 80% by volume of all of the plurality of surface notches (48) of the heater element.

13. An elongate metallic heater element (40) according to either one of claim 11 or claim 12, in which the plurality of surface notches (48) and sub-surface cavities (480) of the heater element are arranged in one or more laterally-symmetric groups.

14. An aerosol-generating device (20) configured to receive an aerosol-forming substrate (34), the aerosol-generating device (20) comprising an elongate metallic heater element (40) according to any one of the preceding claims and a power source (22), the proximal end (44) of the heater element mounted to a mounting location (24) of the aerosol-generating device, the power source (22) in electrical communication with the heater element (40) so as to, in use, resistively heat the heater element (40).

15. An aerosol-generating device (20) according to claim 14, in which the aerosol-generating device is configured such that, in use with an aerosol-forming substrate (34) received in the device, the heater element (40) extends within the aerosol-forming substrate (34) so as to heat the aerosol-forming substrate (34) and generate an inhalable aerosol therefrom.

## Patentansprüche

1. Längliches metallisches Heizelement (40) für einen Gebrauch mit einer Aerosolerzeugungsvorrichtung (20), das Heizelement (40) sich zwischen einem proximalen Ende (44) und einem distalen Ende (45) erstreckend, das proximale Ende (44) dazu eingerichtet, an einer Aerosolerzeugungsvorrichtung (20) für eine elektrischen Verbindung mit der Aerosolerzeugungsvorrichtung (20) angebracht zu werden;
wobei das Heizelement (40) entweder eines oder beides umfasst von:
i) einer Vielzahl von Oberflächenaussparungen (48), die auf einer Oberfläche des Heizelements gebildet sind; und
ii) eine Vielzahl von Unterflächenhohlräumen (480), die unter der Oberfläche des Heizelements definiert sind;
wobei wenigstens einige der Vielzahl von Oberflächenaussparungen (48) und Unterflächenhohlräumen (480) des Heizelements in einer inneren Region (50) des Heizelements vorgesehen sind, die innere Region (50) sich zwischen dem proximalen Ende (44) und 33 % der Länge des Heizelements in Bezug auf das proximale Ende (44) erstreckt, und wobei wenigstens 40 Volumen-% oder wenigstens 50 Volumen-% oder wenigstens 60 Volumen-% oder wenigstens 70 Volumen-% oder wenigstens 80 Volumen-% aller der Vielzahl von Oberflächenaussparungen (48) und Unterflächenhohlräumen (480) des Heizelements in der inneren Region (50) vorgesehen sind.

2. Längliches metallisches Heizelement (40) nach Anspruch 1, wobei die Vielzahl von Oberflächenaussparungen (48) und Unterflächenhohlräumen (480) des Heizelements ein kumulatives Volumen zwischen 15 % und 30 % des Volumens eines entsprechenden Heizelements einnimmt, das frei von solchen Aussparungen und Hohlräumen ist.

3. Längliches metallisches Heizelement (40) nach Anspruch 2, wobei die Vielzahl von Oberflächenaussparungen (48) und Unterflächenhohlräumen (480) des Heizelements ein kumulatives Volumen zwischen 17 % und 26 % des Volumens eines entsprechenden Heizelements einnimmt, das frei von solchen Aussparungen und Hohlräumen ist.

4. Längliches metallisches Heizelement (40) nach einem der Ansprüche 1 bis 3, wobei das Heizelement ferner eine Vielzahl von Durchgangslöchern umfasst, die sich durch eine Dicke des Heizelements erstrecken.

5. Längliches metallisches Heizelement (40) nach einem der Ansprüche 1 bis 4, wobei die Vielzahl von Oberflächenaussparungen (48) und Unterflächenhohlräumen (480) des Heizelements geformt sind, um eine oder mehrere Wabenanordnungen zu definieren.

6. Längliches metallisches Heizelement (40) nach einem der Ansprüche 1 bis 5, wobei das Heizelement (40) die Vielzahl von Oberflächenaussparungen (48) umfasst und frei von jeglichen Unterflächenhohlräumen ist.

7. Längliches metallisches Heizelement (40) nach einem der Ansprüche 1 bis 5, wobei das Heizelement (40) die Vielzahl von Unterflächenhohlräumen (480) umfasst und frei von jeglichen Oberflächenaussparungen ist.

8. Längliches metallisches Heizelement (40) nach einem der Ansprüche 1 bis 7, wobei sich die Oberflächenaussparungen (48) und Unterflächenhohlräume (480) der inneren Region (50) lateral über wenigstens 90 % oder wenigstens 95 % der lateralen Breite des Heizelements erstrecken.

9. Längliches metallisches Heizelement (40) nach einem der Ansprüche 1 bis 8, wobei alle der Vielzahl von Oberflächenaussparungen (48) und Unterflächenhohlräumen (480) des Heizelements in der inneren Region (50) des Heizelements vorgesehen sind.

10. Längliches metallisches Heizelement (40) nach einem der Ansprüche 1 bis 8, wobei einige der Vielzahl von Oberflächenaussparungen (48) und Unterflächenhohlräumen (480) des Heizelements in einer mittleren Region (51) des Heizelements vorgesehen sind, wobei sich die mittlere Region (51) zwischen 33 % und 90 % der Länge des länglichen Heizelements in Bezug auf das proximale Ende (44) erstreckt.

11. Längliches metallisches Heizelement (40) nach einem der Ansprüche 1 bis 10, wobei sich das Heizelement entlang einer Längsachse und lateral nach außen von der Längsachse erstreckt, um eine Klinge zu definieren, die gegenüberliegende erste und zweite längliche Flächen (46, 47) aufweist.

12. Längliches metallisches Heizelement (40) nach Anspruch 11, das Heizelement ferner umfassend eine auf der ersten länglichen Fläche (46) angeordnete Widerstandsheizspur (42), das Heizelement umfassend eine Vielzahl von Oberflächenaussparungen (48) auf der zweiten länglichen Fläche (47), wobei die Oberflächenaussparungen auf der zweiten länglichen Fläche wenigstens 80 Volumen-% aller der Vielzahl von Oberflächenaussparungen (48) des Heizelementes bilden.

13. Längliches metallisches Heizelement (40) nach einem der Ansprüche 11 oder 12, wobei die Vielzahl der Oberflächenaussparungen (48) und Unterflächenhohlräume (480) des Heizelements in einer oder mehreren lateral-symmetrischen Gruppen angeordnet sind.

14. Aerosolerzeugungsvorrichtung (20), dazu eingerichtet, ein aerosolbildendes Substrat (34) aufzunehmen, die Aerosolerzeugungsvorrichtung (20) umfassend ein längliches metallisches Heizelement (40) nach einem beliebigen der vorhergehenden Ansprüche und eine Energiequelle (22), das proximale Ende (44) des Heizelements an einer Anbringungsstelle (24) der Aerosolerzeugungsvorrichtung angebracht, die Energiequelle (22) in elektrischer Verbindung mit dem Heizelement (40), um in Gebrauch das Heizelement (40) durch Widerstand zu erwärmen.

15. Aerosolerzeugungsvorrichtung (20) nach Anspruch 14, wobei die Aerosolerzeugungsvorrichtung derart eingerichtet ist, dass, in Gebrauch mit einem in der Vorrichtung aufgenommenen aerosolbildenden Substrat (34), sich das Heizelement (40) innerhalb des aerosolbildenden Substrats (34) erstreckt, um das aerosolbildende Substrat (34) zu erwärmen und ein inhalierbares Aerosol daraus zu erzeugen.

## Revendications

1. Élément de chauffage métallique allongé (40) destiné à être utilisé avec un dispositif de génération d'aérosol (20), l'élément de chauffage (40) s'étendant entre une extrémité proximale (44) et une extrémité distale (45), l'extrémité proximale (44) étant configurée pour être montée sur un dispositif de génération d'aérosol (20) pour une communication électrique avec le dispositif de génération d'aérosol (20) ;
dans lequel l'élément de chauffage (40) comprend l'une ou l'autre ou les deux parmi :
i) une pluralité d'encoches de surface (48) formées sur une surface de l'élément de chauffage ; et
ii) une pluralité de cavités de sous-surface (480) définies sous la surface de l'élément de chauffage ;
dans lequel au moins certaines de la pluralité d'encoches de surface (48) et de cavités de sous-surface (480) de l'élément de chauffage sont prévues dans une région intérieure (50) de l'élément de chauffage, la région intérieure (50) s'étendant entre l'extrémité proximale (44) et 33 % de la longueur de l'élément de chauffage par rapport à l'extrémité proximale (44), et dans lequel au moins 40 % en volume, ou au moins 50 % en volume, ou au moins 60 % en volume, ou au moins 70 % en volume, ou au moins 80 % en volume de la totalité de la pluralité d'encoches de surface (48) et de cavités de sous-surface (480) de l'élément de chauffage sont prévues dans la région intérieure (50).

2. Élément de chauffage métallique allongé (40) selon la revendication 1, dans lequel la pluralité d'encoches de surface (48) et de cavités de sous-surface (480) de l'élément de chauffage occupent un volume cumulé d'entre 15 % et 30 % du volume d'un élément de chauffage correspondant exempt de telles encoches et cavités.

3. Élément de chauffage métallique allongé (40) selon la revendication 2, dans lequel la pluralité d'encoches de surface (48) et de cavités de sous-surface (480) de l'élément de chauffage occupent un volume cumulé d'entre 17 % et 26 % du volume d'un élément de chauffage correspondant exempt de telles encoches et cavités.

4. Élément de chauffage métallique allongé (40) selon l'une quelconque des revendications 1 à 3, dans lequel l'élément de chauffage comprend en outre une pluralité de trous traversants s'étendant à travers une épaisseur de l'élément de chauffage.

5. Élément de chauffage métallique allongé (40) selon l'une quelconque des revendications 1 à 4, dans lequel la pluralité d'encoches de surface (48) et de cavités de sous-surface (480) de l'élément de chauffage sont formées pour définir un ou plusieurs agencements en nid d'abeilles.

6. Élément de chauffage métallique allongé (40) selon l'une quelconque des revendications 1 à 5, dans lequel l'élément de chauffage (40) comprend la pluralité d'encoches de surface (48) et est exempt de toute cavité de sous-surface.

7. Élément de chauffage métallique allongé (40) selon l'une quelconque des revendications 1 à 5, dans lequel l'élément de chauffage (40) comprend la pluralité de cavités de sous-surface (480) et est exempt de toute encoche de surface.

8. Élément de chauffage métallique allongé (40) selon l'une quelconque des revendications 1 à 7, dans lequel les encoches de surface (48) et les cavités de sous-surface (480) de la région intérieure (50) s'étendent latéralement sur au moins 90 %, ou sur au moins 95 % de la largeur latérale de l'élément de chauffage.

9. Élément de chauffage métallique allongé (40) selon l'une quelconque des revendications 1 à 8, dans lequel la totalité de la pluralité d'encoches de surface (48) et de cavités de sous-surface (480) de l'élément de chauffage sont prévues dans la région intérieure (50) de l'élément de chauffage.

10. Élément de chauffage métallique allongé (40) selon l'une quelconque des revendications 1 à 8, dans lequel certaines de la pluralité d'encoches de surface (48) et de cavités de sous-surface (480) de l'élément de chauffage sont prévues dans une région médiane (51) de l'élément de chauffage, la région médiane (51) s'étendant entre 33 % et 90 % de la longueur de l'élément de chauffage allongé par rapport à l'extrémité proximale (44).

11. Élément de chauffage métallique allongé (40) selon l'une quelconque des revendications 1 à 10, dans lequel l'élément de chauffage s'étend le long d'un axe longitudinal et latéralement vers l'extérieur à partir de l'axe longitudinal pour définir une lame ayant des première et deuxième surfaces allongées (46, 47) opposées.

12. Élément de chauffage métallique allongé (40) selon la revendication 11, l'élément de chauffage comprenant en outre une piste chauffante résistive (42) agencée sur la première surface allongée (46), l'élément de chauffage comprenant une pluralité d'encoches de surface (48) sur la deuxième surface allongée (47), dans lequel les encoches de surface sur la deuxième surface allongée forment au moins 80 % en volume de la totalité de la pluralité d'encoches de surface (48) de l'élément de chauffage.

13. Élément de chauffage métallique allongé (40) selon l'une ou l'autre de la revendication 11 ou de la revendication 12, dans lequel la pluralité d'encoches de surface (48) et de cavités de sous-surface (480) de l'élément de chauffage sont agencées en un ou plusieurs groupes latéralement symétriques.

14. Dispositif de génération d'aérosol (20) configuré pour recevoir un substrat formant aérosol (34), le dispositif de génération d'aérosol (20) comprenant un élément de chauffage métallique allongé (40) selon l'une quelconque des revendications précédentes et une source de puissance (22), l'extrémité proximale (44) de l'élément de chauffage étant montée sur un emplacement de montage (24) du dispositif de génération d'aérosol, la source de puissance (22) étant en communication électrique avec l'élément de chauffage (40) de manière à chauffer l'élément de chauffage (40) par résistance, en utilisation.

15. Dispositif de génération d'aérosol (20) selon la revendication 14, dans lequel le dispositif de génération d'aérosol est configuré de telle sorte que, en utilisation avec un substrat formant aérosol (34) reçu dans le dispositif, l'élément de chauffage (40) s'étend au sein du substrat formant aérosol (34) de manière à chauffer le substrat formant aérosol (34) et à générer un aérosol inhalable à partir de celui-ci.
